(19) Europäisches Patentamt
European Patent Office
Office européen des brevets

(11) Veröffentlichungsnummer: **0 005 736**
**B1**

(12) # EUROPÄISCHE PATENTSCHRIFT

(45) Veröffentlichungstag der Patentschrift: **10.06.81**

(51) Int. Cl.³: **C 08 L 27/06,** C 08 L 69/00

(21) Anmeldenummer: **79101321.2**

(22) Anmeldetag: **02.05.79**

(54) **Weichgemachte Vinylchloridpolymerisate.**

(30) Priorität: **26.05.78 DE 2823161**

(43) Veröffentlichungstag der Anmeldung: **12.12.79 Patentblatt 79/25**

(45) Bekanntmachung des Hinweises auf die Patenterteilung: **10.06.81 Patentblatt 81/23**

(84) Benannte Vertragsstaaten: **BE CH DE FR GB IT NL SE**

(56) Entgegenhaltungen:
**EP-A-0 000 510**
**DE-A-2 651 294**
**FR-A-2 216 318**
**FR-A-2 258 420**

(73) Patentinhaber: **BAYER AG, Zentralbereich Patente, Marken und Lizenzen, D-5090 Leverkusen 1, Bayerwerk (DE)**

(72) Erfinder: **Lindner, Christian, Dr., Riehler Strasse 200, D-5000 Köln 60 (DE)**
Erfinder: **Süling, Carlhans, Dr., Carl-Leverkusen-Strasse 10, D-5068 Odenthal (DE)**
Erfinder: **Bartl, Herbert, Dr., Eichendorffweg 10, D-5068 Odenthal (DE)**
Erfinder: **Hardt, Dietrich, Dr., Nietzschestrasse 8, D-5090 Leverkusen 1 (DE)**
Erfinder: **Brudermanns, Karola, Bonner Strasse 5, D-5090 Leverkusen 3 (DE)**

**EP 0 005 736 B1**

Anmerkung. Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Weichgemachte Vinylchloridpolymerisate

Aus der französischen Patentschrift 2 216 718 sind Formmassen aus

5—95% Polycarbonat
5—95% Vinylchloridpolymerisat
5—95% ABS- oder Styrol/Maleinsäureanhydrid-Copolymerisat oder Ethylen/Vinylacetat-Copolymerisat

bekannt. Dabei handelt es sich um Mischungen, deren Basis ein rein aromatisches Polycarbonat ist.

Gegenstand der Erfindung sind thermoplastische Formmassen aus

a) 10—95 Gew.-% eines Vinylchlorid-Polymerisats,
b) 90— 5 Gew.-% eines Polycarbonats, sowie gegebenenfalls zusätzlich
c) 10—45 Gew.-% [bezogen auf a) und b)] eines polymeren Weichmachers, und
d) üblichen Zusatzstoffen,

die dadurch gekennzeichnet sind, daß das Polycarbonat ein Adipatcarbonatmischester der Formel I

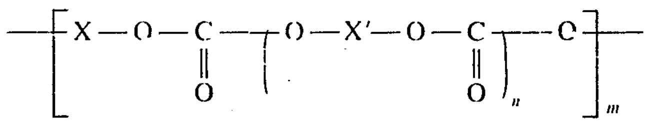

(I)

mit einer Grenzviskosität [$\eta$] (Staudinger Index) in Tetrahydrofuran von 0,8 bis 2,5 dl/g ist, wobei

X und X' Reste des Umsetzungsproduktes eines mehrwertigen aliphatischen Alkohols mit Adipinsäure mit einem Molekulargewicht von 800 bis 3500 bedeuten, und
n eine ganze Zahl von 0 bis 10 und
m eine ganze Zahl größer als 20 ist.

In einer besonderen Ausführungsform enthalten die Formmassen zusätzlich als polymere Weichmacher (c) ein

1. Butadien-Acrylnitril-Copolymerisat mit 25 bis 35 Gew.-% Acrylnitril und 75 bis 65 Gew.-% Butadien, oder
2. Polyurethan aus Adipinsäurepolyester, Diolen mit 2 bis 6 C-Atomen als Kettenverlängerer und aromatischen oder aliphatischen Diisocyanaten, oder
3. Ethylen-Vinylacetat-Copolymerisat mit 60 bis 20 Gew.-% Ethylen und 40 bis 80 Gew.-% Vinylacetat, oder
4. chloriertes Niederdruckpolyethylen mit 28 bis 42 Gew.-% Chlor.

Vinylchlorid-Polymerisate im Sinne der Erfindung sind insbesondere Polyvinylchlorid, Copolymerisate des Vinylchlorids mit bis zu 20 Gew.-% copolymerisierbaren Verbindungen, sowie Pfropfpolymerisate von Vinylchlorid auf Ethylen/Vinylacetat-Copolymerisate (insbesondere mit Vinylchloridgehalten von 40 bis 60 Gew.-%). Mit Vinylchlorid copolymerisierbare Verbindungen sind z. B.

a. Vinylester mit 1—8 C-Atomen im Alkylrest der Carbonsäure;
b. Vinylether mit 3—7 C-Atomen;
c. Maleinsäureanhydrid;
d. Halbester der Maleinsäure mit aliphatischen Alkoholen mit 1—8 C-Atomen im Alkoholrest;
e. Di-ester der Maleinsäure mit aliphatischen Alkoholen mit 1—8 C-Atomen im Alkoholrest.

Als mehrwertige Alkohole für die den Resten X und X' zugrundeliegende Polyester in den Adipat-Carbonat-Mischestern der Formel I kommen, gegebenenfalls im Gemisch miteinander, beispielsweise Ethylenglykol, Propylenglykol-(1,2) und -(1,3), Butylenglykol-(1,4) und -(2,3); Hexandiol-(1,6), Octandiol-(1,8), Neopentylglykol, Cyclohexandimethanal, 1,4-Bis-(hydroxymethylcyclohexan), 2-Methyl-1,3-propandiol, Diethylenglykol, Triethylenglykol, Tetraethylenglykol, Dipropylenglykol und Dibutylenglykol in Frage.

Die aus Adipinsäure und den Alkoholen erhaltenen Umsetzungsprodukte sind Polyester mit

endständigen Hydroxylgruppen. Ihre Molekulargewichte sind etwa 800 bis etwa 3500. Aus diesen Polyestern werden die Adipatcarbonatmischester der Formel I hergestellt durch Umsetzung mit difunktionellen Kohlensäurearylestern. Diese entsprechen insbesondere der Formel II

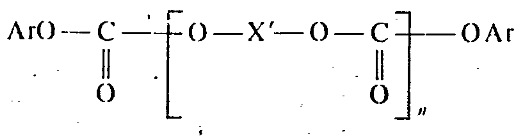

(II)

worin

Ar ein substituierter oder unsubstituierter Arylrest mit 6—18 C-Atomen, bevorzugt mit 6 C-Atomen, ist und

n und X′ die oben gegebene Bedeutung haben.

Solche Verbindungen sind bekannt.

Die Adipat-Carbonat-Mischester sind Gegenstand der Europäischen Patentanmeldung 510.

Zur Umsetzung der Hydroxylgruppen enthaltenden Polyester und der Kohlensäurearylester sind geeignete Katalysatoren die Umesterungskatalysatoren, wie beispielsweise Alkali- oder Erdalkaliphenolate, Alkali- oder Erdalkalialkoholate und tertiäre Amine, wie beispielsweise Triethylendiamin, Morpholin, Pyrrolidin, Pyridin, Triethylamin oder Metallverbindungen wie Antimontrioxid, Zinkchlorid, Titantetrachlorid und Titansäuretetrabutylester.

Der Katalysator wird in Mengen von 10 bis 300 ppm, bezogen auf das Gesamtgewicht der Polykondensationskomponenten, verwendet. Die Katalysatormengen können unterschritten werden, wenn die Ausgangsprodukte bei Verwendung der sauren Katalysatoren keine basischen, bei Verwendung der basischen Katalysatoren keine sauren Verunreinigungen enthalten; möglichst geringe Katalysatormengen sind bevorzugt, um Eigenfarbe der Produkte zu vermeiden.

Vorzugsweise wird in Substanz umgesetzt, also in Abwesenheit von Lösungsmitteln. Es können jedoch auch unter den Reaktionsbedingungen inerte Lösungsmittel wie Kohlenwasserstoffe, insbesondere aromatische Kohlenwasserstoffe, verwendet werden.

Die Reaktionszeit richtet sich nach der Reaktionstemperatur, der Art und Menge des verwendeten Katalysators und nach dem gewünschten Molekulargewicht des Carbonatgruppen enthaltenden Polyesters. Im allgemeinen genügen 2 bis 48 Stunden, vorzugsweise 4 bis 24 Stunden.

Die entstehenden flüchtigen Kondensationsprodukte können während der Reaktion entfernt werden, bei diskontinuierlicher Verfahrensweise destillativ, bei kontinuierlicher Verfahrensweise durch fraktionierte Destillation. Bevorzugt wird mit Natriumphenolat als Katalysator eine Mischung aus Polyesterdiol und bifunktionellem Kohlensäurearylester, vorzugsweise Diphenylcarbonat, oder einer Mischung aus Diphenylcarbonat und Verbindungen der Formel (II) bei 110 bis 170°C polykondensiert und anschließend bei 170°C und höher durch Zufügen eines bifunktionellen Kohlensäurearylesters der Formel (II), bevorzugt mit $n \geqq 1$, unter gleichzeitiger destillativer Abtrennung flüchtiger Kondensationsprodukte die Viskosität des Polykondensationsgemischs erhöht. Es erwies sich als günstig, die Polykondensation in Hochviskos-Reaktoren wie Knetern oder Schneckenmaschinen durchzuführen.

Die Polykondensation kann in bekannter Weise, z. B. durch Absenken der Reaktionstemperatur, Vernichten oder Entfernen des Katalysators oder durch sogenannte Stopper beendet werden. So hat es sich als vorteilhaft erwiesen, im Falle von Alkoholendgruppen Carbonsäurearylester und im Falle von Arylcarbonatendgruppen Alkohole als Stopper einzusetzen. Verwendet man bifunktionelle Verbindungen als Stopper, so ist es möglich, bei genauer Dosierung ein Abbrechen der Polykondensation unter Erhöhung des durchschnittlichen Molekulargewichtes zu erreichen.

Die Grenzviskosität (Staudinger Index) $[\eta]$ wurde in Tetrahydrofuran bei 25°C gemessen und ist in dl/g angegeben. Zur Definition s. H. G. Elias »Makromoleküle«, Hüthig & Wepf-Verlag, Basel, Seite 265.

Die erfindungsgemäßen Mischungen können hergestellt werden, indem pulverförmiges Vinylchloridpolymerisat mit dem Adipat-Carbonat-Mischester, gegebenenfalls unter Zusatz von Stabilisatoren, Gleitmitteln, Pigmenten zunächst gemischt wird. Das Mischen wird naturgemäß erleichtert, wenn der Adipat-Carbonat-Mischester in Pulverform vorliegt. Anschließend kann das Gemisch bei 150°—220°C auf Walzwerken homogenisiert, als Fell abgezogen und zur Weiterverarbeitung granuliert werden. Man kann auch in Knetern mischen, die die plastifizierte Formmasse entweder als Strang austragen oder unmittelbar granulieren oder auf Mischextrudern mit anschließender Granuliervorrichtung homogenisieren. Es lassen sich hierbei auch direkt Fertigartikel extrudieren. Die auf Walzen oder in Knetern hergestellte Formmasse kann unmittelbar auf Kalandern weiterverarbeitet werden. Solche thermoplastischen Mischungen haben den Charakter von Weich-PVC; das gilt auch für die daraus hergestellten und für die Weiterverarbeitung bestimmten Granulate.

Die erfindungsgemäßen Formmassen werden prinzipiell wie Vinylchlorid-Polymerisate stabilisiert,

beispielsweise mit Ba/Cd-, Pb-, Sn-, Zn-, oder organischen Stabilisatoren.

Die Herstellung und Verarbeitung von PVC bzw. Mischungen von PVC mit den verschiedensten Komponenten werden im »Kunststoff-Handbuch« Krekeler Wick, Carl Hanser Verlag, München (1963) beschrieben.

Die erfindungsgemäßen Formmassen können nach den normalen Methoden der Polyvinylchloridverarbeitung verarbeitet werden, beispielsweise durch Spritzguß, Extrusion oder Hohlkörperblasen. Sie werden bevorzugt dort eingesetzt, wo an Weichpolyvinylchlorid große Anforderungen bezgl. Flexibilität, Kältefestigkeit und Migrationsfestigkeit der Weichmacher gestellt werden. Ein besonderer Vorzug der Massen besteht in ihrer vollständigen Transparenz und der vollständigen Mischbarkeit der Komponenten.

Die erfindungsgemäßen Formmassen können mit bekannten hochpolymeren Polyvinylchloridweichmachern weiter verbessert werden und sind damit einwandfrei verträglich. Solche Weichmacher sind z. B. teilvernetzte Butadien-Acrylnitril-Copolymerisate (z. B. mit 29% Acrylnitril), Mooney-Viskosität (ML4, 100° C) DIN 53 523: 70—90 (Verbesserung der Abriebfestigkeit und der Elastizität), Polyurethane (gem. DBP 1 193 241) (Verbesserung der Lösungsmittelbeständigkeit, Abriebfestigkeit und Lichtechtheit), chloriertes Polyethylen (z. B. MG 180 000, Niederdruckpolyethylen) (Verbesserung der Flammfestigkeit), Ethylen/Vinylacetat-Copolymerisate (z. B. MG 200 000, in organischen Lösungsmitteln löslich) (Verbesserung der Lichtechtheit). Die hochpolymeren Weichmacher können den erfindungsgemäßen Massen in Mengen von 10 Gew.-% bis 45 Gew.-% zugesetzt werden.

Die erfindungsgemäßen Formmassen zeichnen sich aus durch eine besonders günstige Kombination physikalischer Eigenschaften, z. B. durch gutes Kältebruchverhalten bei leichter Verarbeitbarkeit und gutes Alterungsverhalten.

## Herstellung der Adipatcarbonatester

1. 2000 Gew.-Teile eines Polyesterdiols aus Adipinsäure und einer Mischung aus n-Hexan-1,6-diol/Neopentylglykol im Verhältnis 65 : 35 vom mittleren Molekulargewicht $\overline{M}n$ 2000 (bestimmt durch OH-Zahl-Messung), 214 Gew.-Teile Diphenylcarbonat und 0,12 Gew.-Teile Natriumphenolat werden unter Rühren und einem Vakuum von 2 mbar 2 Stunden bei 130° C und 1 Stunde bei 150° C gerührt, wobei man flüchtige Polykondensationsprodukte, die zum größten Teil aus Phenol bestehen, abdestilliert. Unter fortgesetzter Destillation steigert man die Temperatur für 4 Stunden auf 180° C; während dieser Zeit werden 20 Gew.-Teile eines über —OCOO-Brücken verlängerten Polytetrahydrofurandiols mit Phenylcarbonatendgruppen ($\overline{M}n$ des Polytetrahydrofuran 2000, Verlängerungsgrad gleich 2) zudosiert, anschließend steigert man unter langsamem Rühren oder Kneten die Reaktionstemperatur auf circa 185 bis 190° C für 5 Stunden. Das Produkt, eine farblose kautschukartige Masse, besitzt einen Staudinger-Index [$\eta$], gemessen in THF, von 1,5.
2. 1800 Gew.-Teile eines Polyesterdiols aus Adipinsäure und n-Hexan-1,6-diol vom mittleren Molekulargewicht $\overline{M}n$ 1800 (bestimmt durch OH-Zahl-Messung), 214 Gew.-Teile Diphenylcarbonat und 0,11 Gew.-Teile Natriumphenolat werden unter Rühren und einem Vakuum von 0,67 mbar 2 Stunden bei 130° C und 1 Stunde bei 150° C gerührt, wobei man flüchtige Polykondensationsprodukte, die zum größten Teil aus Phenol bestehen, abdestilliert. Unter fortgesetzter Destillation steigert man die Temperatur für 4 Stunden auf 180° C; während dieser Zeit werden 35 Gew.-Teile eines über OCOO-Brücken verlängerten Polyesterdiols mit Phenylcarbonatendgruppen ($\overline{M}n$ des Polyesterdiols 2150, bestehend aus Adipinsäure und n-Hexan-1,6-diol, Verlängerungsgrad gleich 2) zudosiert, anschließend steigert man unter langsamem Rühren oder Kneten die Reaktionstemperatur auf 190° C für 4 Stunden, löst dann das Reaktionsgemisch nach Abkühlen auf 120° C in 1 Liter Toluol, fügt unter guter Durchmischung 20 Gew.-Teile des obengenannten Polyesterdiols hinzu und dampft nun das Toluol im Vakuum ab, wobei man langsam die Innentemperatur des Reaktionsgemisches auf 220° C steigert; bei dieser Temperatur wird das Reaktionsgemisch 2 Stunden im Vakuum und sorgfältigem Abdampfen aller flüchtigen Produkte getrocknet. Das so gebildete Material besitzt einen Staudinger-Index [$\eta$], gemessen in THF, von 0,92; es liegt bei Raumtemperatur als farbloses, opakes, kristallines Polymer mit einem Schmelzpunkt von 52° C vor.
3. 1000 Gew.-Teile eines Polyesterdiols aus Adipinsäure und einer Mischung aus n-Hexan-1,6-diol/Neopentylglykol im Verhältnis 65 : 35 vom mittleren Molekulargewicht $\overline{M}n$ 2000 (bestimmt durch OH-Zahl-Messung), 107 Gew.-Teile Diphenylcarbonat und 0,12 Gew.-Teile Natriumphenolat werden unter Rühren und einem Vakuum von 2 mbar 2 Stunden bei 130° C und 1/2 Stunde bei 150° C gerührt, wobei man flüchtige Kondensationsprodukte, die zum größten Teil aus Phenol bestehen, abdestilliert. Nach Abkühlen des Gemisches auf 130° C fügt man eine Mischung aus 900 Gew.-Teilen eines Polyesterdiols aus Adipinsäure und n-Hexan-1,6-diol vom mittleren Molekulargewicht $\overline{M}n$ von 1800 (bestimmt durch OH-Zahl-Messung) und 107 Gew.-Teile Diphenylcarbonat hinzu. Anschließend rührt man 2 Stunden bei 130° C und 2 Stunden bei 160° C unter fortwährender Abdestillation flüchtiger Produkte; man steigert die Temperatur für 4 Stunden auf 180° C; während dieser Zeit werden 22 Gew.-Teile eines über —OCOO-Brücken

verlängerten Polytetrahydrofurandiols mit Phenylcarbonatendgruppen ($\overline{M}n$ des Polytetrahydrofurandiols 2000, Verlängerungsgrad 2) zudosiert; anschließend steigert man unter langsamem Rühren oder Kneten die Reaktionstemperatur für 2 Stunden auf 185°C und für 4 Stunden auf 200°C.

Das Produkt, eine farblose kautschukartige Masse, besitzt einen Staudinger-Index [η], gemessen in THF, von 1,3.

4. 2000 Gew.-Teile eines Polyesterdiols aus Adipinsäure und einer Mischung aus n-Hexan-1,6-diol/Neopentylglykol im Verhältnis 65 : 35 vom mittleren Molekulargewicht $\overline{M}n$ 2000 (bestimmt durch OH-Zahl-Messung), 214 Gew.-Teile Diphenylcarbonat und 0,12 Gew.-Teile Natriumphenolat werden unter Rühren und einem Vakuum von 2 mbar 2 Stunden bei 130°C und 1 Stunde bei 150°C gerührt, wobei man flüchtige Polykondensationsprodukte, die größtenteils aus Phenol bestehen, abdestilliert. Unter fortgesetzter Destillation steigert man die Temperatur für 6 Stunden auf 180°C und 2 Stunden auf 195°C. Das so erhaltene Produkt, eine farblose kautschukartige weiche Masse, besitzt einen Staudinger-Index [η], gemessen in THF, von 0,81.

5. 1333,3 Gew.-Teile eines Polyesterdiols aus Adipinsäure und Diethylenglykol vom mittleren Molekulargewicht $\overline{M}n$ = 2666 (bestimmt durch OH-Zahl-Messung), 107 Gew.-Teile Diphenylcarbonat und 0,07 Gew.-Teile Natriumphenolat werden unter Rühren und einem Vakuum von 2 mbar 1 Stunde bei 130°C und 1 Stunde bei 150°C gerührt, wobei man flüchtige Polykondensationsprodukte abdestilliert. Anschließend heizt man auf 175°C auf und gibt 58 Gew.-Teile eines Polyesters mit Phenylcarbonatendgruppen dazu (Polyester aus Adipinsäure und Hexandiol, $\overline{M}n$ = 2000). Unter fortgesetztem Kneten der Reaktionsmasse hält man das Gemisch für 3 Stunden auf 175°C. Das so erhaltene kautschukartige Produkt besitzt einen Staudinger-Index [η], gemessen in THF, von 1,32.

6. 15,7 Gew.-Teile eines Polyesterdiols aus Adipinsäure und Diethylenglykol vom mittleren Molekulargewicht $\overline{M}n$ = 2666 (bestimmt durch OH-Zahl-Messung), 862,8 Gew.-Teile eines Polyesterdiols aus Adipinsäure und einer Mischung aus n-Hexan-1,6-diol/Neopentylglykol im Verhältnis 65 : 35 vom mittleren Molekulargewicht $\overline{M}n$ = 2000 (bestimmt durch OH-Zahl-Messung) 113,3 Gew.-Teile Diphenylcarbonat und 0,5 Gew.-Teile Natriumphenolat werden unter Rühren und einem Vakuum von 2 mbar 1 Stunde bei 130°C und 1 Stunde bei 150°C gemischt, wobei man flüchtige Polykondensationsprodukte abdestilliert. Unter forgesetztem Kneten der Reaktionsmasse hält man das Gemisch nun bei 175°C und fügt 66 Gew.-Teile eines Polyesters mit Phenylcarbonatendgruppen dazu (Polyester identisch mit oben eingesetztem Neopentylglykolester). Nach 4 Stunden bei 175°C wird ein kautschukartiges Produkt erhalten, das einen Staudinger-Index [η], gemessen in THF, von 0,87 besitzt.

7. 539,3 Gew.-Teile eines Polyesterdiols der Adipinsäure und Diethylenglykol vom mittleren Molekulargewicht $\overline{M}n$ = 2666 (bestimmt analog Beispiel 6), 539,3 Gew.-Teile eines Polyesters aus Adipinsäure und einer Mischung aus n-Hexan-1,6-diol/Neopentylglykol im Verhältnis 65 : 35 vom mittleren Molekulargeweicht $\overline{M}n$ = 2000 (bestimmt analog Beispiel 6), 103,3 Gew.-Teile Diphenylcarbonat und 0,05 Gew.-Teile Natriumphenolat werden unter Rühren und Vakuum entsprechend der Reaktionsbedingung und dem Zusatz eines Polyester-bis-phenylcarbonats des Beispiels 6 umgesetzt. Es wird ein kautschukartiges Produkt erhalten, das einen Staudinger-Index [η], gemessen in THF, von 0,80 besitzt.

8. 2000 Gew.-Teile eines Polyesterdiols aus Adipinsäure und einer Mischung aus n-Hexan-1,6-diol/Neopentylglykol im Verhältnis 65 : 35 vom mittleren Molekulargewicht $\overline{M}n$ 2000 (bestimmt durch OH-Zahl-Messung), 214 Gew.-Teile Diphenylcarbonat und 0,12 Gew.-Teile Natriumphenolat werden unter Rühren und einem Vakuum von 2 mbar 2 Stunden bei 130°C und 1 Stunde bei 150°C gerührt, wobei man flüchtige Polykondensationsprodukte, die zum größten Teil aus Phenol bestehen, abdestilliert. Unter fortgesetzter Destillation steigert man die Temperatur für 2,5 Stunden auf 175°C; während dieser Zeit werden 113 Gew.-Teile eines Polyesterdiols mit Phenylcarbonatendgruppen zudosiert: ($\overline{M}n$ des Polyesterdiols 2000; bestehend aus Adipinsäure und einer Mischung aus n-Hexan-1,6-diol/Neopentylglykol im Verhältnis 65 : 35). Anschließend steigert man die Reaktionstemperatur auf 180°C. In Abhängigkeit von der Reaktionszeit bei 180°C werden farblose, kautschukartige Massen mit unterschiedlichem Staudinger-Index [η], gemessen in THF, erhalten.

| Verbindung | Reaktionszeit bei 180°C | [η]THF |
|---|---|---|
| a | 1/2 Stunde | 1,02 |
| b | 1 1/2 Stunden | 1,20 |
| c | 2 Stunden | 1,45 |
| d | 2 1/2 Stunden | 1,60 |
| e | 3 Stunden | 1,72 |

Formmassen

Beispiel 1

Formmassen aus 97—10 Gew.-Teilen Polyvinylchlorid und entsprechend 3 bis 90 Gew.-Teilen eines Adipatcarbonatmischesters lassen sich einwandfrei verarbeiten. Als Stabilisator und Gleitmittelkombination werden 2 Gew.-% Ba/Cd-Laurat (fest) und 0,2% Esterwachs (Erstarrungspunkt 70 bis 74°C) zugesetzt. Die Formmassen wurden auf einem Mischwalzwerk innerhalb von 10 Minuten bei 170°C hergestellt und zu 0,5 mm starken Walzfellen verarbeitet und daraus bei 175°C Platten gepreßt. Aus diesen Platten wurden die Prüfkörper ausgestanzt. Alle erhaltenen Platten waren transparent. Verwendet wurde ein Suspensionspolyvinylchlorid vom K-Wert 70. Die folgenden Tabellen 1 und 2 erläutern die hergestellten Mischungen und zeigen ihre vorteilhaften physikalischen Eigenschaften.

Tabelle 1

| Polyvinyl-chlorid, Gew.-Teile | Gew.-Teile | Polyester Herstel-lungsvor-schrift | DIN 53 505 Shore-Härte 15″ A | D | DIN 53 455 Reißfestig-keit, MPa | Spannung bei 100% Dehnung, MPa | Bruch-dehnung, % |
|---|---|---|---|---|---|---|---|
| 97 | 3 | 8a | 100 | 83 | 37,8 | – | 12 |
| 94 | 6 | | 100 | 83 | 32,1 | – | 9 |
| 91 | 9 | | 100 | 82 | 41,1 | – | 8 |
| 88 | 12 | | 100 | 82 | 38,9 | – | 11 |
| 85 | 15 | | 100 | 81 | 29,5 | – | 12 |
| 80 | 20 | | 100 | 78 | 26,9 | – | 75 |
| 75 | 25 | | 100 | 71 | 26,8 | 22,3 | 287 |
| 70 | 30 | | 98 | 57 | 24,5 | 18,6 | 275 |
| 65 | 35 | | 93 | 43 | 23,2 | 14,8 | 352 |
| 60 | 40 | | 81 | 29 | 20,4 | 9,5 | 398 |
| 50 | 50 | | 63 | 16 | 15,3 | 4,7 | 527 |
| 40 | 60 | | 49 | 9 | 9,7 | 3,4 | 607 |
| 30 | 70 | | 34 | 6 | 4,6 | 1,6 | 748 |
| 20 | 80 | | 16 | 0 | 1,0 | 0,6 | 580 |
| 10 | 90 | | 7 | 0 | 0,3 | 0,2 | 220 |
| 97 | 3 | 8e | 100 | 81 | 37,8 | – | 11,7 |
| 94 | 6 | | 100 | 81 | 38,5 | – | 13,2 |
| 91 | 9 | | 100 | 81 | 33,3 | – | 10,0 |
| 88 | 12 | | 100 | 80 | 30,4 | – | 10,0 |
| 85 | 15 | | 100 | 79 | 29,2 | – | 22,7 |
| 80 | 20 | | 100 | 76 | 27,9 | – | 68,0 |
| 75 | 25 | | 100 | 68 | 27,0 | 22,7 | 242,4 |

Tabelle 1 (Fortsetzung)

| Polyvinylchlorid, Gew.-Teile | Gew.-Teile | Polyester Herstellungsvorschrift | DIN 53 505 Shore-Härte 15" A | D | DIN 53 455 Reißfestigkeit, MPa | Spannung bei 100% Dehnung, MPa | Bruchdehnung, % |
|---|---|---|---|---|---|---|---|
| 70 | 30 | | 98 | 57 | 27,2 | 19,4 | 314,6 |
| 65 | 35 | | 90 | 39 | 24,0 | 15,5 | 343,2 |
| 60 | 40 | | 82 | 29 | 20,9 | 10,0 | 419,2 |
| 50 | 50 | | 67 | 21 | 16,1 | 5,3 | 494,4 |
| 40 | 60 | | 50 | 9 | 8,6 | 3,0 | 566,0 |
| 30 | 70 | | 36 | 4 | 4,4 | 1,7 | 579,0 |
| 20 | 80 | | 15 | 1 | 1,2 | 0,5 | 724,0 |
| 10 | 90 | | 3 | 0 | 0,3 | 0,1 | 232,0 |

Tabelle 2

| Polyvinylchlorid, Gew.-Teile | Gew.-Teile | Polyester Vorschrift Nr. | DIN 53 505 Shore-Härte 15" A | D | DIN 53 455 Reißfestigkeit, MPa | Spannung bei 100% Dehnung, MPa | Bruchdehnung, % |
|---|---|---|---|---|---|---|---|
| 60 | 40 | 2 | 84 | 31 | 21,6 | 10,2 | 382 |
| 70 | 30 | 4 | 95 | 51 | 24,3 | 17,3 | 328 |
| 60 | 40 | 4 | 78 | 29 | 18,9 | 7,7 | 420 |
| 50 | 50 | 4 | 63 | 17 | 12,0 | 4,3 | 440 |
| 60 | 40 | 6 | 84 | 32 | 21,1 | 10,3 | 399 |
| 60 | 40 | 7 | 91 | 36 | 21,2 | 12,2 | 364 |
| 70 | 30 | 8b | 99 | 58 | 26,7 | 21,7 | 263 |
| 60 | 40 | 8b | 84 | 31 | 22,7 | 12,4 | 377 |
| 50 | 50 | 8b | 68 | 23 | 10,2 | 5,8 | 430 |
| 60 | 40 | 8c | 84 | 32 | 23,2 | 10,9 | 405 |
| 60 | 40 | 8d | 82 | 32 | 20,9 | 10,3 | 393 |
| 50 | 50 | 8d | 67 | 22 | 16,4 | 5,8 | 513 |

## Beispiel 2

Wie in Beispiel 1 werden Mischungen hergestellt aus

(A) Suspensionspolyvinylchlorid (K-Wert 70),
(B) dem Adipat-Carbonat-Mischester gemäß Vorschrift 8 c), und
(C) einem teilvernetzten Butadien-Acrylnitril-Copolymerisat (29% Acrylnitril); Mooney-Viskosität (ML4, 100°C) DIN 53 523: 70—90.

Die Komponenten sind miteinander verträglich und ergeben transparente Preßplatten. Die physikalischen Eigenschaften und die Zusammensetzung der Massen zeigt die Tabelle 3.

Tabelle 3

| Zusammensetzung, Gew.-Teile A | B | C | Shore-Härte 15" DIN 53 505 A | D | Reißfestigkeit DIN 53 455, MPa | Spannung bei 100% Dehnung, MPa | Bruchdehnung, % | Weiterreißfestigkeit DIN 53 515, kN/m |
|---|---|---|---|---|---|---|---|---|
| 60 | – | 40 | 99 | 54 | 26,1 | 16,5 | 297 | 75 |
| 60 | 10 | 30 | 98 | 52 | 27,6 | 17,8 | 314 | 94 |
| 60 | 20 | 20 | 96 | 48 | 26,4 | 14,2 | 376 | 100 |
| 60 | 30 | 10 | 92 | 42 | 24,6 | 12,9 | 392 | 84 |
| 60 | 40 | – | 84 | 33 | 22,5 | 11,2 | 405 | 70 |

**Beispiel 3**

Beispiel 2 wird wiederholt, aber als Bestandteil (C) ein Polyurethan (Ultramoll PU®), hergestellt nach der deutschen Patentschrift 1 193 241, benutzt. Die Ergebnisse zeigt die Tabelle 4.

Tabelle 4

| Zusammensetzung, Gew.-Teile PVC A | ACN B | PU C | Shore-Härte 15" DIN 53 505 A | D | Reißfestigkeit DIN 53 455, MPa | Spannung bei 100% Dehnung, MPa | Bruchdehnung, % | Weiterreißfestigkeit DIN 53 515, kN/m |
|---|---|---|---|---|---|---|---|---|
| 60 | – | 40 | 97 | 53 | 25,2 | 15,0 | 379 | 107 |
| 60 | 10 | 30 | 96 | 49 | 24,3 | 15,4 | 346 | 103 |
| 60 | 20 | 20 | 92 | 44 | 21,5 | 12,1 | 346 | 86 |
| 60 | 30 | 10 | 88 | 38 | 21,0 | 11,0 | 376 | 79 |
| 60 | 40 | – | 84 | 32 | 23,5 | 11,5 | 392 | 72 |

**Beispiel 4**

Beispiel 2 wird wiederholt, aber als Bestandteil (C) ein lösliches Ethylen-Vinylacetat-Copolymerisat (70 Gew.-% Vinylacetat) Molekulargewicht 200 000 benutzt. Die Ergebnisse zeigt die Tabelle 5.

Tabelle 5

| Zusammensetzung, Gew.-Teile PVC A | ACN B | EVAC C | Shore-Härte 15" DIN 53 505 A | D | Reißfestigkeit DIN 53 455, MPa | Spannung bei 100% Dehnung, MPa | Bruchdehnung, % | Weiterreißfestigkeit DIN 53 515, kN/m |
|---|---|---|---|---|---|---|---|---|
| 60 | – | 40 | 99 | 69 | 24,8 | 19,4 | 233 | 130 |
| 60 | 10 | 30 | 98 | 62 | 22,1 | 15,6 | 261 | 98 |
| 60 | 20 | 20 | 96 | 54 | 24,5 | 13,1 | 342 | 83 |
| 60 | 30 | 10 | 91 | 44 | 21,5 | 11,1 | 373 | 73 |
| 60 | 40 | – | 84 | 33 | 22,5 | 11,2 | 405 | 70 |

**Beispiel 5**

**Beispiel 2 wird wiederholt, aber als Bestandteil (C) chloriertes Niederdruckpolyethylen (Chlorgehalt 35,1%, Molekulargewicht 180 000) genommen.**

**Die Ergebnisse zeigt die Tabelle 6.**

Tabelle 6

| Zusammensetzung, Gew.-Teile A | B | C | Shore-Härte 15" DIN 53 505 A | D | Reißfestigkeit DIN 53 455, MPa | Spannung bei 100% Dehnung, MPa | Bruchdehnung, % | Weiterreißfestigkeit DIN 53 515, kN/m |
|---|---|---|---|---|---|---|---|---|
| 60 | – | 40 | 98 | 45 | 4,9 | 6,2 | 169 | 38,7 |
| 60 | 10 | 30 | 98 | 52 | 10,7 | 10,9 | 115 | 55,2 |
| 60 | 20 | 20 | 99 | 57 | 23,6 | 15,0 | 309 | 95,0 |
| 60 | 30 | 10 | 92 | 38 | 23,7 | 12,0 | 357 | 83,8 |
| 60 | 40 | – | 84 | 33 | 22,5 | 11,2 | 405 | 70,0 |

**Beispiel 6**

**Wie in Beispiel 1 werden Mischungen hergestellt aus**

**(A) EVAC/VC-Pfropfpolymerisat mit 50% EVAC, welches 45 Gew.-% Vinylacetat und 55 Gew.-% Ethylen enthält;**
**(B) Adipat-Carbonat-Mischester gemäß Vorschrift 8 a).**

**Die Komponenten sind miteinander verträglich und ergeben transparente Preßplatten. Die physikalischen Eigenschaften und die Zusammensetzung der Massen zeigt die Tabelle 7.**

Tabelle 7

| EVAC/VC-Pfropfpolymerisat, Gew.-Teile | Polyester-Herstellungsvorschrift 8a), Gew.-Teile | DIN 53 505 Shore-Härte 15" | | DIN 53 455 Reißfestigkeit, MPa | DIN 53 455 Spannung bei 100% Dehnung, MPa | DIN 53 455 Bruchdehnung, % | DIN 53 515 Weiterreißwiderstand, kN/m |
|---|---|---|---|---|---|---|---|
| | | A | D | | | | |
| 90 | 10 | 85 | 30 | 15,8 | 5,9 | 377 | 39,8 |
| 80 | 20 | 65 | 20 | 14,4 | 3,7 | 461 | 27,5 |
| 70 | 30 | 54 | 14 | 9,4 | 1,6 | 508 | 24,1 |
| 60 | 40 | 45 | 10 | 7,4 | 1,7 | 576 | 20,7 |
| 50 | 50 | 37 | 6 | 3,4 | 0,9 | 573 | 16,6 |

## Patentansprüche

1. Thermoplastische Formmassen aus

a) 10—95 Gew.-% eines Vinylchloridpolymerisats,
b) 90— 5 Gew.-% eines Polycarbonats, sowie gegebenenfalls zusätzlich
c) 10—45 Gew.-% [bezogen auf a) und b)] eines polymeren Weichmachers, und
d) üblichen Zusatzstoffen,

dadurch gekennzeichnet, daß das Polycarbonat ein Adipatcarbonatmischester der Formel I

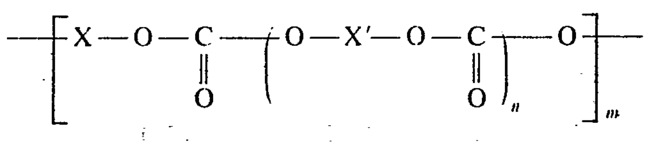

(I)

mit einer Grenzviskosität [$\eta$] (Staudinger Index) in Tetrahydrofuran von 0,8 bis 2,5 dl/g ist, wobei

X und X' Reste des Umsetzungsproduktes eines mehrwertigen aliphatischen Alkohols mit Adipinsäure mit einem Molekulargewicht von 800 bis 3500 bedeuten, und
n eine ganze Zahl von 0 bis 10, und
m eine ganze Zahl größer als 20 ist.

2. Formmasse nach Anspruch 1, dadurch gekennzeichnet, daß der polymere Weichmacher (c) ein

1. Butadien-Acrylnitril-Copolymerisat mit
25 bis 35 Gew.-% Acrylnitril und
75 bis 65 Gew.-% Butadien, oder
2. Polyurethan aus Adipinsäurepolyester, Diolen mit 2 bis 6 C-Atomen als Kettenverlängerer und aromatischen oder aliphatischen Diisocyanaten, oder
3. Ethylen-Vinylacetat-Copolymerisat mit
60 bis 20 Gew.-% Ethylen und
40 bis 80 Gew.-% Vinylacetat, oder
4. chloriertes Niederdruckpolyethylen mit 28 bis 42 Gew.-% Chlor

ist.

## Claims

1. Thermoplastic moulding compositions comprising

a) 10 to 95% by weight of a vinyl chloride polymer,
b) 90 to 5% by weight of a polycarbonate and, if appropriate, in addition
c) 10 to 45% by weight [based on a) and b)] of a polymeric plasticizer, and
d) customary additives,

characterised in that the polycarbonate is an adipate carbonate mixed ester of the formula I

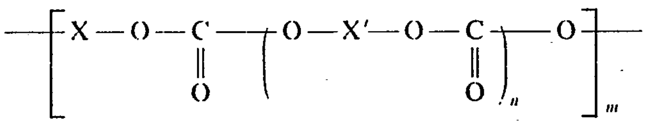

(I)

with an intrinsic viscosity [$\eta$] (Staudinger Index) in tetrahydrofuran of from 0,8 to 2,5 dl/g, wherein

X and X′ denote radicals of the reaction product of a polyhydric aliphatic alcohol with adipic acid having a molecular weight of from 800 to 3500; and
n is an integer of from 0 to 10, and
m is an integer of greater than 20.

2. Moulding composition according to claim 1, characterised in that the polymeric plasticizer (c) is

1. a butadiene acrylonitrile copolymer containing 25 to 35% by weight of acrylonitrile and 75 to 65% by weight of butadiene, or
2. a polyurethane of adipic acid polyester, diols with 2 to 6 carbon atoms as chain extender and aromatic or aliphatic diisocyanates, or
3. an ethylene/vinyl acetate copolymer containing 60 to 20% by weight of ethylene and 40 to 80% by weight of vinyl acetate, or
4. a chlorinated low pressure polyethylene containing from 28 to 42% by weight of chlorine.

**Revendications**

1. Matières à mouler thermoplastiques formées de

a) 10 à 95% en poids d'un polymérisat de chlorure de vinyle,
b) 90 à 5% en poids d'un polycarbonate, avec en outre, le cas échéant,
c) 10 à 45% en poids [par rapport à a) et b)] d'un plastifiant polymérique, et
d) des additifs classiques,

caractérisées en ce que le polycarbonate est un coester adipate-carbonate de formule I:

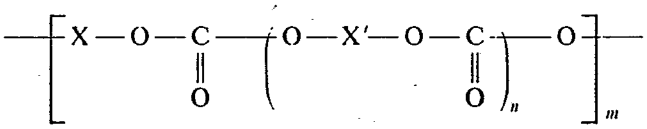

(I)

ayant une viscosité intrinsèque [$\eta$] (indice de Staudinger) dans le tétrahydrofuranne de 0,8 à 2,5 dl/g,

X et X′ désignant des restes du produit de réaction d'un alcool aliphatique polyvalent avec l'acide adipique, ayant un poids moléculaire de 800 à 3500,
n est un nombre entier de 0 à 10, et
m est un nombre entier supérieur à 20.

2. Matière à mouler suivant la revendication 1, caractérisée en ce que le plastifiant polymérique (c) est

1. un copolymère butadiène-acrylonitrile renfermant 25 à 35% en poids d'acrylonitrile et 75 à 65% en poids de butadiène, ou
2. un polyuréthanne dérivé d'un polyester d'acide adipique, de diols ayant 2 à 6 atomes de carbone comme agents d'allongement de chaîne et de diisocyanates aromatiques ou aliphatiques, ou
3. un copolymère éthylène-acétate de vinyle renfermant 60 à 20% en poids d'éthylène et 40 à 80% en poids d'acétate de vinyle, ou
4. un polyéthylène basse pression chloré renfermant 28 à 42% en poids de chlore.